# EUROPEAN PATENT APPLICATION

(11) **EP 4 648 116 A1**
(43) Date of publication of application: **12.11.2025**
(21) Application number: 24863274.7
(22) Date of filing: 06.09.2024
(51) Int. Cl.: H01M 4/04, H01M 4/13, B30B 3/04

(54) **ELECTRODE PRODUCTION APPARATUS AND BATTERY CELL COMPRISING ELECTRODES PRODUCED THEREBY, AND BATTERY PACK AND VEHICLE COMPRISING BATTERY CELLS**

(30) Priority: 07.09.2023 KR 20230119296
(71) Applicant: LG Energy Solution, Ltd., Seoul 07335 (KR)
(72) Inventor: LEE, Ju-Hyeong, Daejeon 34122 (KR)
(74) Representative: Goddar, Heinz J.
(86) International application number: PCT/KR2024/013547
(87) International publication number: WO 2025/053695

(57) **Abstract**

Disclosed are an electrode producing device, a battery cell including an electrode produced using the same, and a battery pack and a vehicle including the battery cell. According to an embodiment of the present disclosure, an electrode producing device for producing an electrode by transporting an electrode foil on which a coated portion of a coating layer and an uncoated portion of a non-coating layer are formed may include: a transport unit configured to transport the electrode foil; a coated-portion pressurizing unit configured to pressurize the coated portion of the electrode foil transported by the transport unit; and an uncoated-portion pressurizing unit spaced apart from the coated-portion pressurizing unit and configured to pressurize the uncoated portion.

## Description

### TECHNICAL FIELD

This application is based on and claims priority from Korean Patent Application No. 10-2023-0119296, filed on September 07, 2023, with the Korean Intellectual Property Office, the disclosure of which is incorporated herein in its entirety by reference.

The present disclosure relates to an electrode producing device, a battery cell including an electrode produced using the same, and a battery pack and a vehicle including the battery cell, and more specifically, it relates to an electrode producing device applicable to various electrodes, a battery cell including an electrode produced using the same, and a battery pack and a vehicle including the battery cell.

### BACKGROUND ART

In general, secondary batteries refer to batteries capable of being repeatedly charged and discharged, such as lithium-ion batteries, lithium-polymer batteries, nickelcadmium batteries, nickel-hydrogen batteries, nickel-zinc batteries, and the like.

Depending on the shape of a battery case, a secondary battery may be classified into a cylindrical battery and a prismatic battery in which the electrode assembly is stored inside a cylindrical and prismatic metal can, and a pouch-type battery in which the electrode assembly is stored inside a pouch-type case made of an aluminum laminate sheet.

Such a secondary battery may be manufactured by storing an electrode assembly, including a positive electrode and a negative electrode that are laminated with a separator therebetween, and an electrolyte in a case of various shapes, and sealing the case.

The electrode (positive electrode or negative electrode) of the secondary battery may include a coated portion on which a coating layer is formed by pressing an electrode mixture onto the surface of an electrode foil, and an uncoated portion on which the coating layer is not formed.

In addition, the electrode of the secondary battery may be produced through a roll-to-roll process in which an electrode foil having a coating layer formed on the surface thereof is rolled and moved. Here, the electrode foil is pressed by a rolling roll while moving between the rolls.

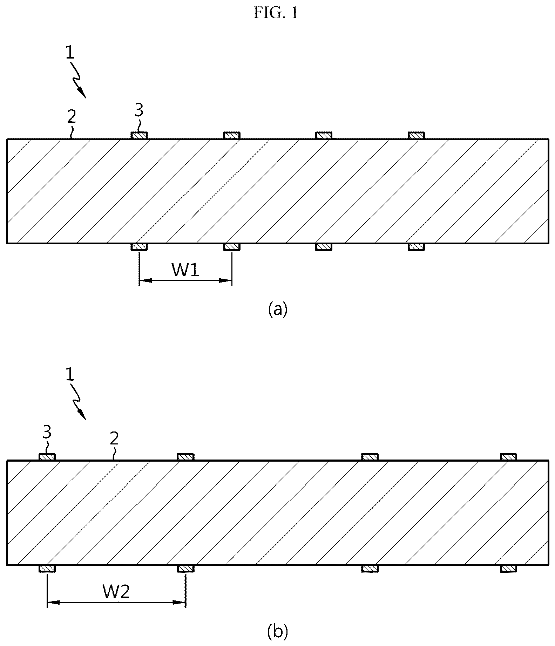

FIGS. 1(a) and 1(b) are cross-sectional views of a conventional rolling roll having a protrusion formed thereon.

Referring to FIGS. 1(a) and 1(b), a protrusion 3 is formed on the surface of a main body 2 of a rolling roll 1. Here, the main body 2 presses the coated portion, and the protrusion 3 formed on the main body 2 presses the uncoated portion of the electrode foil to prevent wrinkles from occurring in the uncoated portion.

However, if the specifications (e.g., the width of the electrode) of the battery cell change, the rolling roll 1 must be newly manufactured according thereto. For example, if a rolling roll 1 in FIG. 1(b) having an interval between the protrusions 3, which is greater than that of the rolling roll 1 in FIG. 1(a) currently used to produce the electrode, is required (see W1 and W2) due to a change in the width of the electrode, a rolling roll 1 having the interval between the protrusions 3 as in FIG. 1(b) must be newly manufactured because the protrusions 3 in FIG. 1(a) are fixed to the main body 2.

That is, the rolling rolls 1 must be manufactured to conform to various specifications and kept in stock, and the entirety of an existing rolling roll 1 must be replaced with a new rolling roll 1 that meets the specifications of the battery cell, causing problems with difficult replacement and an increase in the replacement time.

In addition, since all types of rolling rolls 1 must be manufactured in order to meet the relevant specifications, the manufacturing cost increases, and it is not easy to store all types of rolling rolls 1 that meet the specifications.

In addition, the overall process time also increases due to an increase in the replacement time of the rolling roll 1.

### DISCLOSURE

### Technical Problem

The present disclosure is designed to solve the problems of the related art, and therefore the present disclosure is directed to providing an electrode producing device applicable to various types of battery cells having electrodes of various specifications, a battery cell including an electrode produced using the same, and a battery pack and a vehicle including the battery cell.

In addition, the present disclosure is also to provide an electrode producing device capable of reducing the manufacturing cost and process time, a battery cell including an electrode produced using the same, and a battery pack and a vehicle including the battery cell.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided an electrode producing device for producing an electrode by transporting an electrode foil on which a coated portion of a coating layer and an uncoated portion of a non-coating layer are formed, which comprises: a transport unit configured to transport the electrode foil; a coated-portion pressurizing unit configured to pressurize the coated portion of the electrode foil transported by the transport unit; and an uncoated-portion pressurizing unit spaced apart from the coated-portion pressurizing unit and configured to pressurize the uncoated portion.

In an embodiment, the uncoated-portion pressurizing unit may include: a rotation roller configured to rotate in contact with the electrode foil; and a circumferential coupling portion coupled to a circumference of the rotation roller so as to be changeable from one position to another position on the rotation roller.

In an embodiment, the circumferential coupling portion may be detachably coupled to the rotation roller, and the circumferential coupling portion may protrude from the rotation roller when coupled to the rotation roller.

In an embodiment, the coated-portion pressurizing unit may include a pressurizing roller

In an embodiment, a plurality of circumferential coupling portions may be provided, and the plurality of circumferential coupling portions may be coupled to the rotation roller at predetermined intervals.

In an embodiment, a magnetic member may be installed inside the rotation roller, and the circumferential coupling portion may be configured as a rubber magnet.

In an embodiment, the magnetic member may include a permanent magnet or an electromagnet.

In an embodiment, the electromagnet may include a wired electromagnet or a wireless electromagnet.

In an embodiment, a plurality of magnetic member may be provided, and the plurality of magnetic members may be disposed at predetermined intervals along an inner circumference of the rotation roller.

In an embodiment, a cross-section of the rotation roller may be circular, and the plurality of magnetic members may be disposed along the circular cross-section.

In an embodiment, the rubber magnet may be magnetically coupled to the magnetic member inside the rotation roller.

In an embodiment, the rotation roller may be made of stainless steel.

In an embodiment, a cross-section of the circumferential coupling portion may be one of a trapezoid, a semi-ellipse, and a square.

According to another aspect of the present disclosure, there are provided a battery cell including an electrode produced using the electrode producing device described above, a battery pack including at least one battery cell described above, and a vehicle including at least one battery cell described above.

### Advantageous Effects

In the embodiments of the present disclosure, since the uncoated-portion pressurizing unit provided in the pressurizing unit is configured to be changed from one position to another position relative to the coated-portion pressurizing unit, replacement of the entire pressurizing unit is unnecessary, and accordingly, the present disclosure is applicable to various types of battery cells having electrodes of various specifications.

In addition, there is an effect of reducing the manufacturing cost and process time.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIGS. 1(a) and 1(b) are cross-sectional views of a conventional rolling roll having a protrusion formed thereon.
FIG. 2 is a perspective view schematically illustrating an electrode producing device according to an embodiment of the present disclosure.
FIG. 3 is a perspective view schematically illustrating a pressurizing unit in an electrode producing device according to an embodiment of the present disclosure.
FIG. 4 is a cross-sectional view illustrating the state in which an uncoated-portion pressurizing unit is separated from a coated-portion pressurizing unit in a pressurizing unit of an electrode producing device according to an embodiment of the present disclosure.
FIGS. 5(a) and 5(b) are drawings illustrating an uncoated-portion pressurizing unit of a pressurizing unit in an electrode producing device according to an embodiment of the present disclosure.
FIG. 6 is a cross-sectional view illustrating the state in which an uncoated-portion pressurizing unit is coupled to a coated-portion pressurizing unit in an electrode producing device according to an embodiment of the present disclosure.
FIG. 7 is a cross-sectional view illustrating the state in which the uncoated-portion pressurizing unit is coupled to the coated-portion pressurizing unit after the position thereof is changed from FIG. 6.
FIG. 8 is a cross-sectional view taken along line A-A' in FIG. 3.
FIG. 9 is a diagram schematically illustrating the configuration of a battery pack including a battery cell equipped with an electrode produced using an electrode producing device according to respective embodiments of the present disclosure.
FIG. 10 is a diagram illustrating a vehicle including the battery pack in FIG. 9.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

The expression "an element is 'coupled' or 'connected' to another element" should be understood that the elements may be directly coupled or connected to each other and that the elements may be indirectly coupled or connected to each other through a connection member.

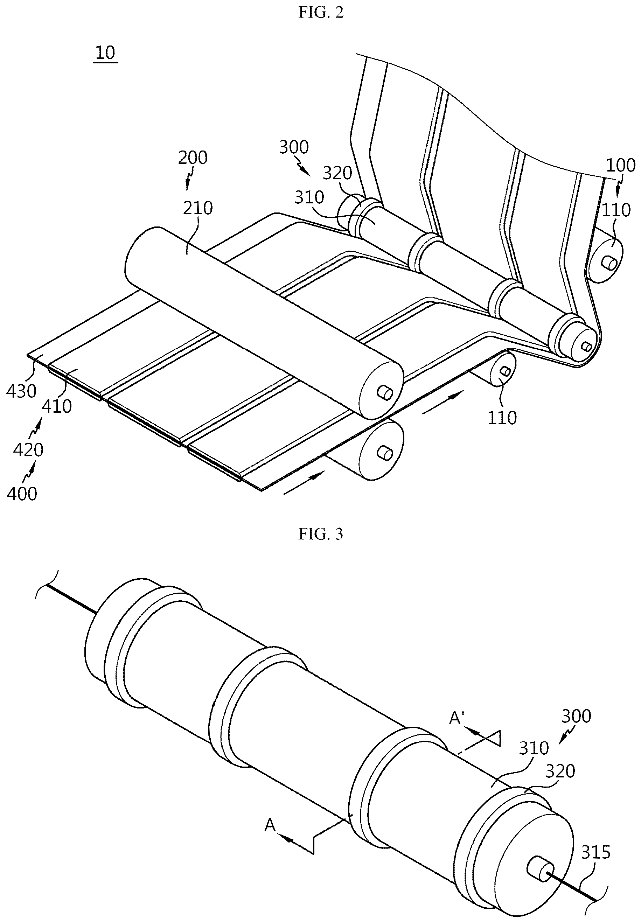

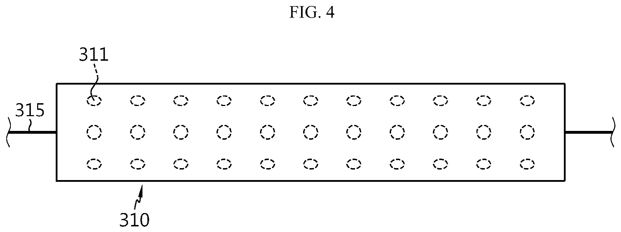

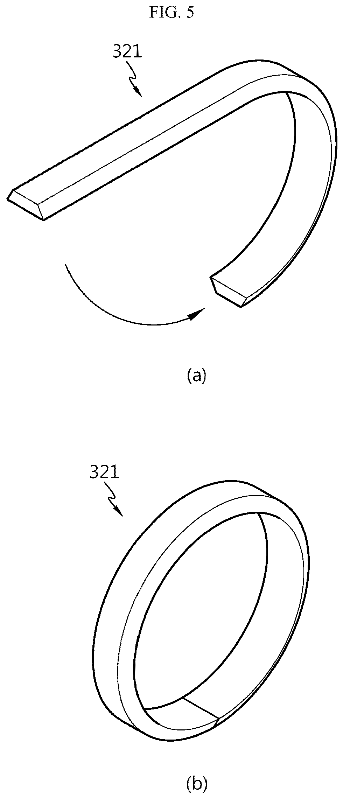

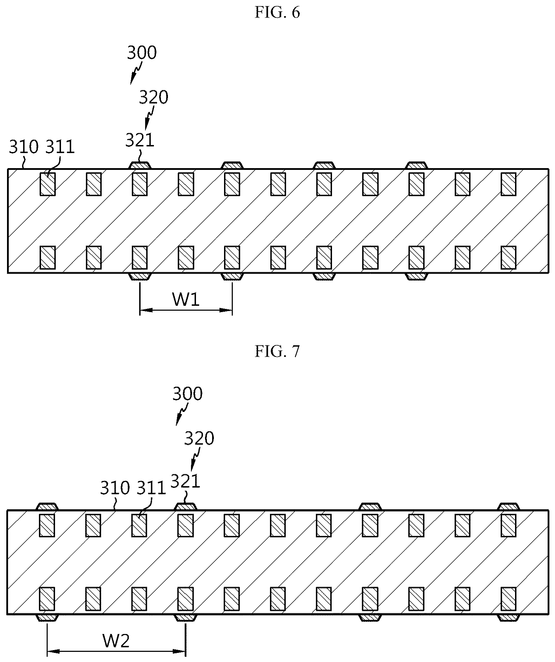

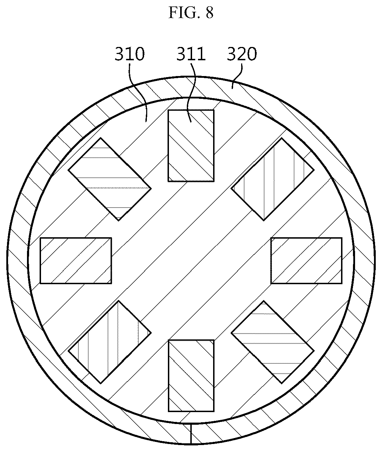

FIG. 2 is a perspective view schematically illustrating an electrode producing device according to an embodiment of the present disclosure, FIG. 3 is a perspective view schematically illustrating a pressurizing unit in an electrode producing device according to an embodiment of the present disclosure, FIG. 4 is a cross-sectional view illustrating the state in which an uncoated-portion pressurizing unit is separated from a coated-portion pressurizing unit in a pressurizing unit of an electrode producing device according to an embodiment of the present disclosure, FIGS. 5(a) and 5(b) are drawings illustrating an uncoated-portion pressurizing unit of a pressurizing unit in an electrode producing device according to an embodiment of the present disclosure, FIG. 6 is a cross-sectional view illustrating the state in which an uncoated-portion pressurizing unit is coupled to a coated-portion pressurizing unit in an electrode producing device according to an embodiment of the present disclosure, FIG. 7 is a cross-sectional view illustrating the state in which the uncoated-portion pressurizing unit is coupled to the coated-portion pressurizing unit after the position thereof is changed from FIG. 6, and FIG. 8 is a cross-sectional view taken along line A-A' in FIG. 3.

Referring to FIG. 2, an electrode producing device 10 according to an embodiment of the present disclosure relates to a device for producing an electrode (positive electrode or negative electrode) by transporting an electrode foil 400 on which a coating layer 410 is formed. Electrodes include both a wet electrode and a dry electrode.

For example, the wet electrode is manufactured through a process of applying a electrode mixture in a slurry state including a solvent onto the surface of an electrode substrate such as an electrode foil 400 to form a coating layer 410 and drying the coating layer 410.

In addition, the dry electrode is manufactured through a process of forming a coating layer 410 by pressing an electrode mixture in a powder state (powder mixture), which does not contain a solvent, onto the surface of an electrode foil 400. That is, the electrode mixture is prepared without a liquid medium such as a solvent or dispersion medium, and then the electrode mixture in a powder state is pressed while passing through a rolling roll, thereby manufacturing the electrode.

Here, the electrode foil 400 may include a coated portion 420 having a coating layer 410 of an active material formed on the surface, and an uncoated portion 430 on which the coating layer 410 of an active material is not formed.

Referring to FIG. 2, the electrode producing device 10 according to an embodiment of the present disclosure includes a transport unit 100, a coated-portion pressurizing unit 200, and an uncoated-portion pressurizing unit 300.

The transport unit 100 transports the electrode foil 400 on which the coating layer 410 is formed. The transport unit 100 may be configured in various ways, and may include a plurality of transport rollers 110 to transport the electrode foil 400, for example, in a roll-to-roll manner.

Although the transport unit 100 is not limited thereto, an embodiment in which the transport unit 100 includes a plurality of transport rollers 110 will be described below for convenience of explanation. In addition, the arrow indicates a transport direction of the electrode foil 400 in FIG. 2.

The coated-portion pressurizing unit 200 pressurizes the coated portion 420 of the electrode foil 400 transported by the transport unit 100. The coated-portion pressurizing unit 200 may be configured in various ways, and may include, for example, a pressurizing roller 210, but is not limited thereto.

Referring to FIG. 2, a coating layer 410 of an active material is formed on the coated portion 420 of the electrode foil 400, and a coating layer 410 is not formed on the uncoated portion 430, so the coated portion 420 is thicker than the uncoated portion 430.

Here, if only the coated portion 420 is pressurized by the coated-portion pressurizing unit 200, the uncoated portion 430 that is not pressurized may be wrinkled or deformed while being transported by the transport roller 110.

In order to prevent the wrinkles or deformation of the uncoated portion 430, the electrode producing device 10 according to an embodiment of the present disclosure includes an uncoated-portion pressurizing unit 300.

The uncoated-portion pressurizing unit 300 is spaced apart from the coated-portion pressurizing unit 200 and pressurizes the uncoated portion 430. Here, referring to FIG. 2, the uncoated-portion pressurizing unit 300 may be configured to include a rotation roller 310 and a circumferential coupling portion 320. The rotation roller 310 comes into contact with the electrode foil 400 and rotates. In addition, the circumferential coupling portion 320 is coupled to the circumference of the rotation roller 310.

Here, if the circumferential coupling portion 320 of the uncoated-portion pressurizing unit 300 is fixed to the rotation roller 310, all types of uncoated-portion pressurizing units 300 must be manufactured to meet various specifications of the battery cells.

For example, in the case where one battery cell (a first model of battery cell) has a width W1 between the uncoated portions 430 and another battery cell (a second model of battery cell) has a width W2, which is different from W1, between the uncoated portions 430, both the electrode having the width W1 and the electrode having the width W2 must be provided in order to manufacture all of the first model of battery cell and the second model of battery cell.

That is, an uncoated-portion pressurizing unit 300 is required to manufacture the first model of battery cell, and another uncoated-portion pressurizing unit 300 is required to manufacture the second model of battery cell, and accordingly, various widths between the uncoated portions 430 depending on the model of battery cell require a larger number of uncoated-portion pressurizing units 300. In addition, there is also the inconvenience of having to replace the uncoated-portion pressurizing unit 300 each time the battery cell model varies.

To solve these problems, the electrode producing device 10 according to an embodiment of the present disclosure includes an uncoated-portion pressurizing unit 300 that has a rotation roller 310 and a circumferential coupling portion 320, and the circumferential coupling portion 320 is coupled to the circumference of the rotation roller 310 so as to be changeable from one position to another position on the rotation roller 310.

That is, the circumferential coupling portion 320 may be configured to switch from one coupling position with the rotation roller 310 to another coupling position with the rotation roller 310.

The circumferential coupling portion 320 may be configured to be changeable from one position to another position on the rotation roller 310 in various manners, and for example, the circumferential coupling portion 320 may be implemented to be detachably coupled to the rotation roller 310. The circumferential coupling portion 320 is not necessarily limited to the detachable coupling, and an embodiment in which the circumferential coupling portion 320 is moved to other positions while being coupled to the rotation roller 310 is also possible, as needed.

Here, referring to FIG. 3, when the circumferential coupling portion 320 is coupled to the rotation roller 310, the circumferential coupling portion 320 may be configured to protrude from the rotation roller 310. Therefore, as shown in FIG. 2, the circumferential coupling portion 320 of the uncoated-portion pressurizing unit 300 may pressurize the uncoated portion 430 of the electrode foil 400.

Referring to FIG. 3, a plurality of circumferential coupling portions 320 may be provided, and in this case, the plurality of circumferential coupling portions 320 may be coupled to the rotation roller 310 at predetermined intervals.

Referring to FIG. 4 and FIG. 8, a magnetic member 311 may be installed inside the rotation roller 310. In addition, the circumferential coupling portion 320 may be configured as a rubber magnet 321 (see FIG. 5). That is, the rubber magnet 321 may be coupled to the surface of the rotation roller 310 by reacting with the magnetic member 311 inside the rotation roller 310, and may also be separated from the rotation roller 310.

Here, the magnetic member 311 inside the rotation roller 310 may include a permanent magnet or an electromagnet. The magnetic member 311, as a permanent magnet, may include various types of magnets having an intensity of magnetism that allows the rubber magnet 321 to be attached to and separated from the surface of the rotation roller 310.

In addition, the magnetic member 311, as an electromagnet, may include a wired electromagnet or a wireless electromagnet.

The wired electromagnet may be configured such that the wire 315 thereof extends to the outside through the center of the rotation roller 310 as shown in FIGS. 3 and 4, so the wire 315 may be prevented from twisting while rotating with the rotation roller 310 at the center of the rotation roller 310 when the rotation roller 310 rotates. Alternatively, various known methods may be applied to prevent twisting when the wire 315 rotates.

The wireless electromagnet supplies current wirelessly and does not have a wire 315, so twisting of the wire 315 is not a problem.

Meanwhile, the rubber magnet 321 is configured to have sufficient elasticity. That is, as shown in FIGS. 5(a) and 5(b), the rubber magnet 321 may change shape due to elasticity and also has the properties of a magnet.

In addition, the rubber magnet 321 (see FIG. 5) is coupled to the rotation roller 310 so as to wrap around the surface of the rotation roller 310 while the shape is transformed, as shown in FIG. 3. In this case, the magnetic member 311 such as a permanent magnet or an electromagnet is mounted inside the rotation roller 310 as described above, and the rubber magnet 321 is magnetically coupled to the magnetic member 311 inside the rotation roller 310, so that the rubber magnet 321 may be attached to the surface of the rotation roller 310.

In addition, if necessary, the rubber magnet 321 may be separated from the rotation roller 310. For example, if the magnetic member 311 mounted to the rotation roller 310 is a permanent magnet, the worker applies an appropriate force to separate the rubber magnet 321 coupled to the rotation roller 310. In addition, if the magnetic member 311 mounted to the rotation roller 310 is an electromagnet, the rubber magnet 321 may be separated from the rotation roller 310 by cutting off the current supply to the electromagnet.

Referring to FIG. 6, the interval between the rubber magnets 321 is appropriately adjusted to have a width W1 between the uncoated portions 430 of the electrode foil 400 in order to manufacture a first model of battery cell. In this case, the rubber magnet 321 is attached to the rotation roller 310 at a position corresponding to the magnetic member 311 inside the rotation roller 310. In this case, a plurality of magnetic member 311 may be disposed at predetermined intervals along the inner circumference of the rotation roller 310.

In addition, when manufacturing a second model of battery cell, as shown in FIG. 7, the interval between the rubber magnets 321 is appropriately adjusted to have a width W2 between the uncoated portions 430 of the electrode foil 400, and the rubber magnets 321 are attached to the rotation roller 310.

Meanwhile, the cross-section of the rotation roller 310 may have various shapes, for example, it may be circular (see FIG. 8), but is not limited thereto. In addition, the plurality of magnetic members 311 may be disposed along the circular cross-section of the rotation roller 310.

The rotation roller 310 may be made of various materials. For example, the rotation roller 310 may be made of stainless steel to have a predetermined range of rigidity, but is not limited thereto.

In addition, the cross-section of the rubber magnet 321 of the circumferential coupling portion 320 may be configured in various shapes. For example, referring to FIGS. 6 and 7, the cross-section of the rubber magnet 321 may be a trapezoid, but is not limited thereto, and the cross-section of the rubber magnet 321 may be one of, for example, a semi-ellipse and a square, or may be configured in other various shapes.

The electrode producing device 10 according to an embodiment of the present disclosure has the following effects.

First, since the circumferential coupling portion 320 coupled to the rotation roller 310 is configured to be changeable from one position to another position, there is no need to replace the entire uncoated-portion pressurizing unit 300, and it is easily applicable to various types of battery cells having electrodes of various specifications by simply changing the position of the circumferential coupling portion 320.

In addition, all types of uncoated-portion pressurizing units 300 do not need to be provided, so it is possible to reduce the manufacturing cost and eliminate the difficulty of storage.

In addition, since there is no need to replace the entire uncoated-portion pressurizing unit 300, the replacement time may be reduced, thereby shortening the overall process time.

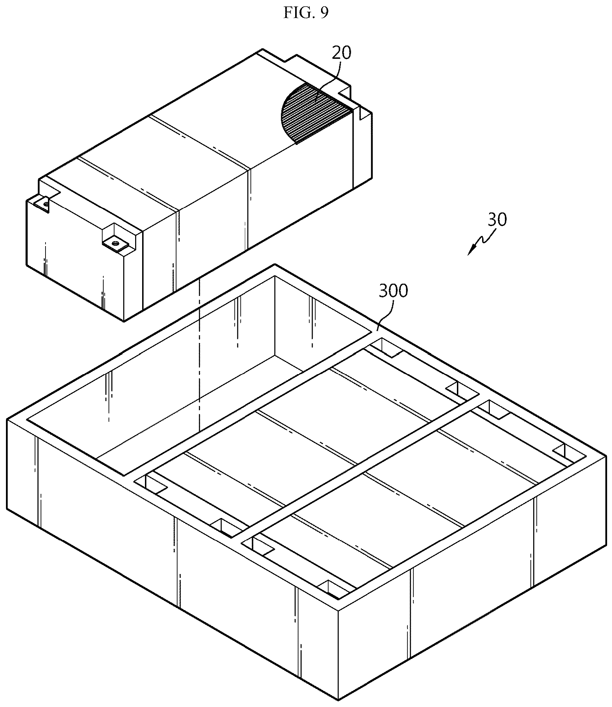

FIG. 9 is a diagram schematically illustrating the configuration of a battery pack including a battery cell equipped with an electrode produced using an electrode producing device according to respective embodiments of the present disclosure.

Referring to FIG. 9, a battery pack 30 according to an embodiment of the present disclosure may include one or more battery cells 20. Here, the battery cell 20 includes an electrode produced using the electrode producing device 10 according to the respective embodiments of the present disclosure described above.

In addition, the battery pack 30 may further include a pack housing 300 for storing the battery cell 20 and various devices for controlling charging and discharging of the battery cell 20, such as a BMS, a current sensor, a fuse, and the like.

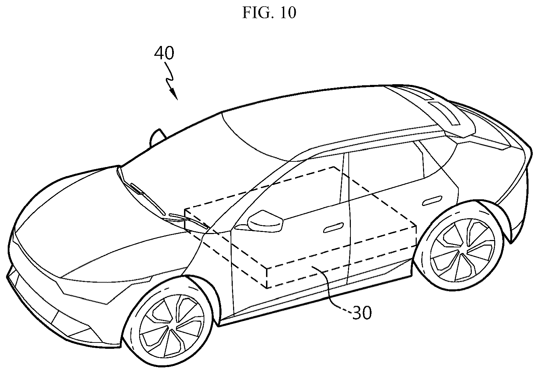

FIG. 10 is a diagram illustrating a vehicle including the battery pack in FIG. 9.

Referring to FIG. 10, a vehicle 40 according to an embodiment of the present disclosure may include one or more battery cells 20 including electrodes produced using the electrode producing device 10 according to the respective embodiments of the present disclosure or one or more battery packs 30 described above. Here, the vehicle 40 includes various vehicles that are designed to use electricity, such as an electric vehicle or a hybrid vehicle.

Meanwhile, although terms indicating directions such as upward, downward, left, right, and front are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains. Therefore, the previously disclosed embodiments should be considered as those intended to describe the present disclosure, instead of those intended to limit the present disclosure. In other words, the true scope of the technical idea of the present disclosure is shown in the claims, and all differences within the scope equivalent thereto should be construed as being included in the present disclosure.

### INDUSTRIAL APPLICABILITY

The present disclosure relates to an electrode producing device, a battery cell including an electrode produced using the same, and a battery pack and a vehicle including the battery cell, and is particularly applicable to industries related to secondary batteries.

## Claims

1. An electrode producing device for producing an electrode by transporting an electrode foil on which a coated portion of a coating layer and an uncoated portion of a non-coating layer are formed, the electrode producing device comprising:
a transport unit configured to transport the electrode foil;
a coated-portion pressurizing unit configured to pressurize the coated portion of the electrode foil transported by the transport unit; and
an uncoated-portion pressurizing unit spaced apart from the coated-portion pressurizing unit and configured to pressurize the uncoated portion.

2. The electrode producing device according to claim 1,
wherein the uncoated-portion pressurizing unit comprises:
a rotation roller configured to rotate in contact with the electrode foil; and
a circumferential coupling portion coupled to a circumference of the rotation roller so as to be changeable from one position to another position on the rotation roller.

3. The electrode producing device according to claim 2,
wherein the circumferential coupling portion is detachably coupled to the rotation roller, and
wherein the circumferential coupling portion is configured to protrude from the rotation roller when coupled to the rotation roller.

4. The electrode producing device according to claim 2,
wherein a plurality of circumferential coupling portions are provided, and
wherein the plurality of circumferential coupling portions are coupled to the rotation roller at predetermined intervals.

5. The electrode producing device according to claim 2,
wherein a magnetic member is installed inside the rotation roller, and
wherein the circumferential coupling portion is configured as a rubber magnet.

6. The electrode producing device according to claim 5,
wherein the magnetic member comprises a permanent magnet or an electromagnet.

7. The electrode producing device according to claim 6,
wherein the electromagnet comprises a wired electromagnet or a wireless electromagnet.

8. The electrode producing device according to claim 5,
wherein a plurality of magnetic member are provided, and
wherein the plurality of magnetic members are disposed at predetermined intervals along an inner circumference of the rotation roller.

9. The electrode producing device according to claim 8,
wherein a cross-section of the rotation roller is circular, and
wherein the plurality of magnetic members are disposed along the circular cross-section.

10. The electrode producing device according to claim 5,
wherein the rubber magnet is magnetically coupled to the magnetic member inside the rotation roller.

11. The electrode producing device according to claim 2,
wherein the rotation roller is made of stainless steel.

12. The electrode producing device according to claim 2,
wherein a cross-section of the circumferential coupling portion is one of a trapezoid, a semi-ellipse, and a square.

13. The electrode producing device according to claim 1,
wherein the coated-portion pressurizing unit comprises a pressurizing roller.

14. A battery cell comprising an electrode produced using an electrode producing device according to any one of claims 1 to 13.

15. A battery pack comprising at least one battery cell according to claim 14.

16. A vehicle comprising at least one battery cell according to claim 14.
